# EUROPÄISCHE PATENTSCHRIFT

(11) **EP 0 431 611 B1**
(45) Veröffentlichungstag und Bekanntmachung des Hinweises auf die Patenterteilung: **25.01.1995**
(21) Anmeldenummer: 90123429.4
(22) Anmeldetag: 06.12.1990
(51) Int. Cl.: A01D 43/00

(54) **Erntemaschine**
Harvesting machine
Moissonneuse

(30) Priorität: 08.12.1989 DE 3940673; 08.12.1989 DE 3940672; 08.12.1989 DE 3940671
(43) Veröffentlichungstag der Anmeldung: 12.06.1991
(73) Patentinhaber: SAME S.p.A., I-24047 Treviglio (Bergamo) (IT)
(72) Erfinder: Liebers, Ulrich, D-4040 Neuss (DE); Schmittbetz, Klaus, D-5024 Pulheim 4 (DE); von Allwörden, Wilhelm, D-7704 Gailingen (DE)
(74) Vertreter: Nau, Walter, Dipl.-Ing.

(56) Entgegenhaltungen:
- EP-A- 0 205 206
- EP-A- 0 408 850
- WO-A-90/12492
- DE-A- 1 962 777
- FR-A- 590 562
- GB-A- 478 505
- GB-A- 2 019 731
- NL-A- 6 909 348
- US-A- 2 664 684
- US-A- 4 332 125
- LANDBOUW MECHANISATIE. vol. 40, no. 2, 01 Februar 1989, WAGENINGEN NL Seiten 21- 23; BOSMA EN KOEGEL

## Beschreibung

Die Erfindung betrifft eine Erntemaschine nach dem Oberbegriff des Patentanspruches 1, mit der erntefähiges Blatt- oder Halmgut aufbereitet wird, zur Beschleunigung des Trocknungsprozeßes, an den sich ein zeitlich versetzter, weiterer Arbeitsprozeß anschließt.

Aus der DE-A-19 62 777 ist eine entsprechende Erntemaschine bekannt, deren Aufbau eine Gewinnungsvorrichtung für das Blatt- oder Halmgut aufweist, an die sich Transport- oder Fördereinrichtung anschließen, über die das Erntegut Aufbereitungsanordnungen zugeführt wird, in denen das Erntegut als Matte geformt wird. Dieser bekannten Maschine sind keinerlei Hinweise zur gleichmäßigen Ausbildung einer Matte zu entnehmen.

Die WO-A-90 12 492 zeigt ebenfalls eine Erntemaschine zur Aufbereitung von erntefähigem Blatt- oder Halmgut mit einer Preßeinrichtung, wobei jedoch vor der Preßeinrichtung kein Transportband und kein Pufferraum vorgesehen ist.

Aus der gattungsbildenden EP-A-0 408 850 ist eine Erntemaschine zur Aufbereitung von erntefähigem Blatt- oder Halmgut, insbesondere für Grünfutter, bekannt. Diese gezogene oder selbstfahrende Maschine ist derart ausgebildet, daß das Gut über Zuführeinrichtungen, die unter anderem das Gut gewinnen, einer ersten Aufbereitungsanordnung zugeleitet wird, der ein Transportband nachgeschaltet ist, welches mit einem Pufferraum und einer Dosierwalze in Verbindung steht und bis zu einer zweiten, dahinter angeordneten Aufbereitungsanordnung reicht und der sich eine Ablageeinrichtung für das aufbereitete und zu einer Matte geformte Erntegut auf dem Boden anschließt, wobei im Bereich des Transportbandes zumindest eine bewegliche Führungseinrichtung vorgesehen ist, mit der die Breite zumindest eine Erntegutmatte einstellbar ist.

Es ist daher Aufgabe der Erfindung, eine Erntemaschine so zu gestalten, daß zur Erzielung eines kurzen Trocknungsprozeßes unabhängig von dem Halmgutanfall gleich gut aufbearbeitete Matten möglichst gleichmäßiger Dichte hergestellt werden.

Die Aufgabe wird durch die im kennzeichnenden Teil von Anspruch 1 aufgeführten Merkmale gelöst. Eine Ausgestaltung der Erfindung sieht eine Erfassung der Blatt- oder Halmgutmenge im Pufferraum vor, die über Sensoren erfolgt und durch die abhängig vom momentanen Durchsatz der Erntegutmenge die Führungseinrichtung beeinflußbar ist. Vorzugsweise bietet sich dazu eine stufenlose Einstellung der Führungseinrichtung an. Zur Darstellung einer Einflußnahme der Fördergeschwindigkeit der Aufbereitungs- und Preßanordnung entsprechend der anfallenden Blatt- bzw. Halmgutmenge sieht die Erfindung die im Pufferraum angeordneten Sensoren vor, die in Abhängigkeit der momentan durchgesetzten Grünfuttermenge über eine Regeleinrichtung eine Drehzahländerung der Antriebsanordnung bewirkt. Vorteilhaft kann damit eine an den Durchsatz angepaßte Drehzahl (Aufbereitungs- und Preßanordnung) und der Dosierwalze sowie der Fördergeschwindigkeit des Transportbandes realisiert werden.

Eine Ausgestaltung der Erfindung sieht eine Preßanordnung als zweite Aufbereitungsanordnung vor, mit der das in der ersten Aufbereitungsanordnung aufbereitete Grünfutter einer Pressung unterzogen wird, bei der die in dem Blatt- oder Halmgut vorhandene Flüssigkeit weitestgehend herausgepreßt wird. Durch die Einflußnahme auf die Breite des Erntegutstrangs kann im nachfolgenden Preßvorgang eine Erntegutmatte mit nahezu konstanter Dicke und damit gleichbleibender Dichte hergestellt werden, wobei sich die Breite der Erntegutmatte an den Erntegutdurchsatz anpaßt.

Versuche haben ergeben, daß zur Optimierung der Ernteleistung die axiale Breite zwischen der Aufbereitungsanordnung und der Preßanordnung vorteilhaft unterschiedlich ist. Dieser Breitenunterschied entspricht der voneinander abweichenden Durchsatzleistung der einzelnen Organe.

Zur gleichmäßigen Beaufschlagung der Preßanordnung über die gesamte axiale Breite ist das Transportband an die Breite der Preßanordnung angepaßt. In gleicher Weise stimmt auch die Breite der Dosierwalze mit der Breite der Preßanordnung überein. Erfindungsgemäß ist weiter vorgesehen, daß vorteilhaft oberhalb des Transportbandes mehrere parallel zueinander in Längsrichtung des Transportbandes angeordnete Führungseinrichtungen eingesetzt sind, durch die jeweils ein Erntegutstrang der Preßanordnung zugeführt wird zur Bildung von Erntegutmatten, die parallel nebeneinander auf dem Boden abgelegt werden. Ebenso bietet es sich an, mehrere Transportbänder vorzusehen, die z. B. nebeneinander angeordnet jeweils mit einer oder mehreren Führungseinrichtungen versehen sind. Zur vereinfachten Aufnahme der abgetrockneten Erntegutmatten in einem nachgeschalteten Arbeitsvorgang ist vorgesehen, daß die Ablage von mehreren parallel nebeneinander abgelegten Erntegutmatten erfolgt. Zur besseren Aufnahme der Erntegutmatten in einem zeitversetzt späteren Arbeitsvorgang ist die Breite der einzelnen Erntegutmatten begrenzt auf die übliche Spurweite von Schlepper, die vorzugsweise in Verbindung mit Aufsammelmaschinen zur Bergung der Erntegutmatten eingesetzt werden.

Eine weitere Ausgestaltung der Erfindung sieht vor, daß die Anzahl der Mattengutstränge in den daraus gebildeten Erntegutmatten unmittelbar vom Grünfutterdurchsatz bestimmt wird, d. h. bei einem reduzierten Grünfutterdurchsatz wird durch die stufenlose Einstellbarkeit der Breitenzuführung zur Preßanordnung das Erntegut durch die Führungseinrichtung so geleitet, daß vorangig eine gleichmäßige mit gleicher Dichte versehene Erntegutmatte gebildet wird, unabhängig von der Anzahl der Erntegut-Mattenstränge.

Als Führungseinrichtung bietet es sich an, Führungsbleche einzusetzen, die sich im wesentlichen parallel zum Transportband erstrecken und senkrecht dazu angeordnet sind. Zur Darstellung einer einfachen, aber wirkungsvollen Führungseinrichtung ist das Führungsblech um eine senkrechte Achse schwenkbar, bzw. zur Längsachse des Transportbandes senkrecht verschiebbar.

Alternativ sieht die Erfindung vor als Führungseinrichtung Stellrollen, Förderschnecken oder dergleichen einzusetzen, mit denen der Erntegutstrang im Bereich des Transportbandes beeinflußbar, d. h. die Breite bestimmbar ist.

Eine weitere Ausgestaltung der Erfindung sieht die Verwendung eines Getriebes sowohl für den Antrieb des Transportbandes als auch für den Antrieb der Dosierwalze vor, mit dem vorteilhaft eine einstellbare Bandgeschwindigkeit, bzw. Drehzahl erreichbar ist. Als Getriebe bietet sich dazu ein stufenlos verstellbares Umschlingungsgetriebe an.

Der Aufbau der vorliegenden Erntemaschine weist weiter eine Zuführeinrichtung zur Gewinnung des Halm- bzw. Blattgutes in Form einer Pick-up-Anordnung auf oder alternativ dazu eine Mäh- oder Schneidanordnung.

Als Antrieb der erfindungsgemäßen gezogenen Erntemaschine dient eine Antriebseinrichtung, mit der vom Zugfahrzeug die gezogene Erntemaschine angetrieben wird. Alternativ dazu ist die Maschine mit einem Eigenantrieb ausgestattet.

Weitere Merkmale der Erfindung ergeben sich aus der Figurenbeschreibung, die ausführlich das in den Zeichnungen dargestellte Ausführungsbeispiel erläutert.

Es zeigt:
- Fig.1 u. 2:: Einen Längsschnitt durch die erfindungsgemäße Erntemaschine,
- Fig 3 u. 4:: jeweils in der Draufsicht das Transportband mit der erfindungsgemäßen Führungseinrichtung.

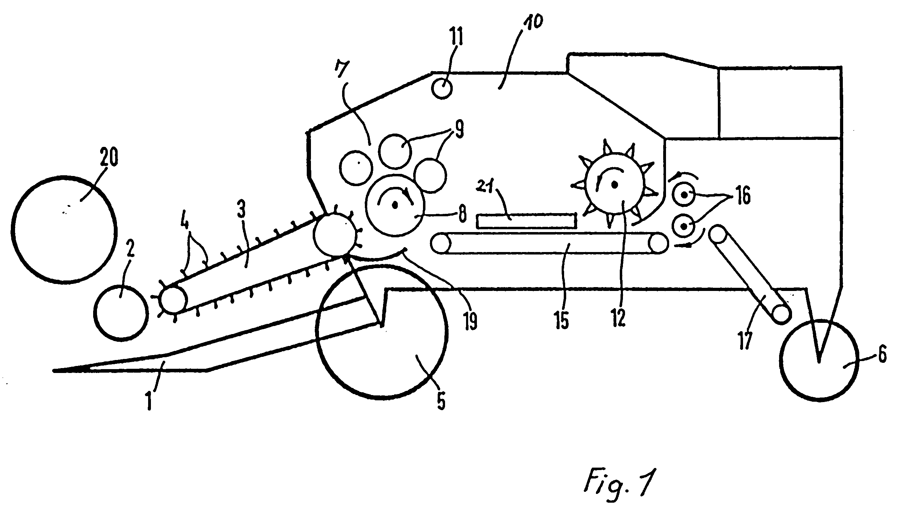

Die Fig.1 zeigt in einem Längsschnitt schematisch die erfindungsgemäße Erntemaschine. Zur Gewinnung des Halm- bzw. Blattgutes dient ein Mähwerk 1, welches mit einer Haspel 20 versehen ist, wie es beispielsweise von Mähdrescher-Schneidwerken bekannt ist. Oberhalb des Mähwerkes 1 ist eine Einzugsschnecke 2 angeordnet, die das Erntegut dem Förderband 3 zuführt und zur ersten Aufbereitungsanordnung 7 weiterleitet. Zur Erhöhung der Förderleistung ist das Förderband 3 mit elastischen Mitnehmern 4 versehen.

Die erste Aufbereitungsanordnung 7 ist versehen mit einer Schneidkantenwalze 8 und einer Vielzahl dieser entlang eines Teils ihres Umfangs umgebenden und im Abstand zu ihr angeordneten sogenannten Planeten-Riffelwalzen 9 geringeren Durchmessers, deren Drehrichtung entgegengesetzt zu derjenigen der Schneidkantenwalze 8 ist. Die Drehgeschwindigkeit der Planeten-Riffelwalze 9 kann dabei unterschiedlich zu derjenigen der Schneidkantenwalze 8 sein. Entsprechend dem Abstand zwischen der Schneidkantenwalze 8 und der Planeten-Riffelwalze 9, deren Achsen parallel zueinander angeordnet sind, erfolgt eine feinfaserige Aufbereitung des Blatt- bzw. Halmgutes. Das aufbereitete Erntegut gelangt anschließend auf das im wesentlichen waagerecht angeordnete Transportband 15, dem oberhalb ein Pufferraum 10 zugeordnet ist. Unmittelbar oberhalb des Transportbandes 15 ist ein verschwenkbar, bzw. einstellbar angeordnetes Führungsblech 21 dargestellt, mit dem der aufbereite Erntegutstrom in seiner Breite beeinflußbar ist.

Ebenfalls oberhalb des Transportbandes 15 in Fahrtrichtung der Erntemaschine dem Pufferraum 10 nachgeschaltet ist eine Dosierwalze 12, die das Erntegut der Preßanordnung 16 zuführt, die vorzugsweise aus zwei sich entgegengesetzt zueinander drehenden und im Abstand voneinander in einer senkrechten Ebene übereinander angeordneten Quetschwalzen besteht. Das Blatt- oder Halmgut passiert diese Preßanordnung 16, die das Erntegut zu einer Matte mit einer Stärke von vorzugsweise 6 bis 10 mm formt. Dabei bindet der in den Fasern haftende Zellsaft auch die feineren Teile an die Matte, sofern eine ausreichende Preßkraft auf das Erntegut von der Preßanordnung 16 ausgeübt wird. Das zu einer Matte geformte Erntegut wird über ein zum Boden geneigt angeordnetes Ablageband 17 auf dem Boden abgelegt.

Die Erntemaschine -versehen mit den Vorderrädern 5 und den Hinterrädern 6- wird über die Antriebswelle 11 angetrieben, die symbolisch einen Anbaumotor oder eine Antriebsübertragung zu einem Zugfahrzeug darstellen soll.

Unterhalb des Eintrittsspaltes zwischen dem Förderband 3 und der Aufbereitungsanordnung 7 ist eine Steinfangmulde 19 angeordnet, die zur Aufnahme von Steinen oder anderen die Erntemaschine behindernden Gegenstände dient, die über die Zuführeinrichtung mit aufgenommen werden können.

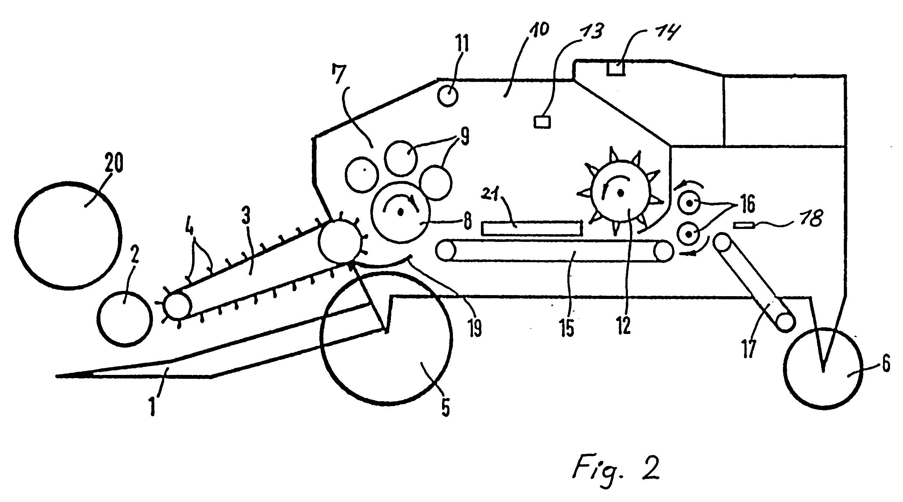

Der Fig. 2, die im wesentlichen übereinstimmt mit der in Fig.1 dargestellten Erntemaschine, ist eine Regeleinrichtung 14 entnehmbar, die mit einem oder mehreren Sensoren 13 in Verbindung steht. Die Sensoren 13 dienen zur Erfassung des Durchsatzes von aufbereitetem Blatt- bzw. Halmgut, deren Signale über die Regeleinrichtung 14 zur Beeinflußung des Antriebes der Aufbereitungsanordnung 7, des Transportbandes 15, der Dosierwalze 12, sowie der Preßanordnung 16 und des Ablagebandes 17 nutzbar sind, zur Drehzahl-bzw. Geschwindigkeitsanpassung an die momentane Beaufschlagung. Der Antrieb aller zuvor aufgeführten Organe zur Aufbereitung bzw. Preßung des Erntegutes kann weiter mit einem Getriebe versehen werden. Weiter ist vorgesehen, die Regeleinrichtung 14 mit einem die Fördergeschwindigkeit der Preßanordnung 16 überwachenden Sensor 18 auszustatten, der mit einer die Fahrgeschwindigkeit der Erntemaschine überwachenden Einrichtung in Verbindung steht. Damit ist ein störungsfreier Betrieb der Erntemaschine, d. h. Optimierung der Fahrgeschwindigkeit an dem Durchsatz der Erntemaschine erreichbar, wobei der Antrieb als Funktion der Fahrgeschwindigkeit erfolgt und weiter die Ablage der Erntegutmatte über das Ablageband nur während der Fahrt erfolgt.

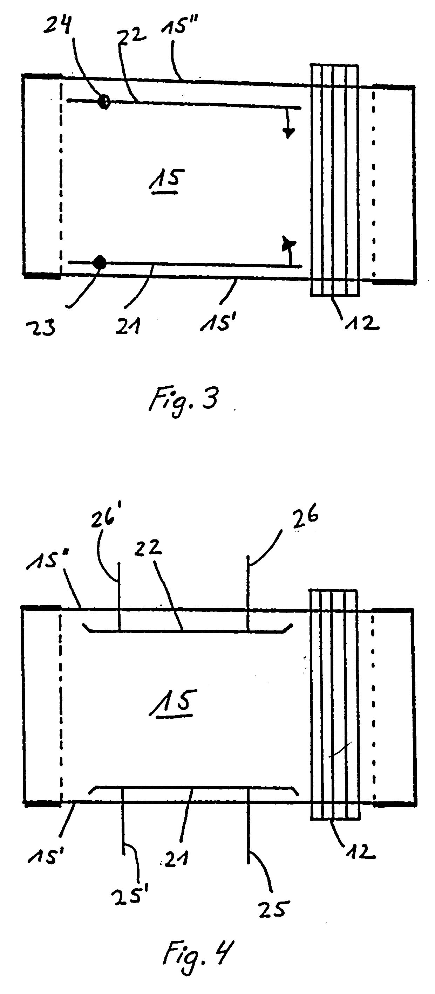

Die Fig.3 zeigt die Draufsicht auf das Transportband 15, wobei in der Nähe der beiden Außenränder 15' und 15'' des Transportbandes 15 jeweils ein bewegliches, sich im wesentlichen parallel zum Transportband erstreckendes, senkrecht angeordnetes Führungsblech 21, 22 vorgesehen ist, mit dem die Breite der Erntegutmatte einstellbar ist. Mit Hilfe von elektrischen, hydraulischen oder mechanischen Schwenkmitteln können die beiden Führungsbleche 21, 22 um zwei im wesentlichen senkrechte Achsen 23, 24 in Richtung der Pfeile sowie entgegengesetzt dazu verschwenkt werden. Damit ist eine veränderliche Breite der über das Transportband 15 der Preßanordnung 16 zugeführten Blatt- und Halmgutmenge erreichbar. Durch Sensoren, die im Pufferraum 10 angeordnet sind, in Verbindung mit einer Regeleinrichtung 14 kann eine selbsttätige Anpassung der Halmgutmattenbreite bei gleichbleibender Dichte in Abhängigkeit vom Erntegut-Durchsatz erreicht werden.

Fig.4 zeigt ein weiteres Ausführungsbeispiel in Anlehnung an die Draufsicht gemäß Fig.3, bei der das Transportband 15 mit einer Führungseinrichtung in Form eines Führungsbleches 21, 22 versehen ist, die ebenfalls in der Nähe der beiden Außenräder 15', 15'' angeordnet sind. Zur Einstellung der Mattengutbreite sind die beiden Führungsbleche 21, 22 durch schematisch angeordnete Schub-Zugstangen 25, 25' und 26, 26'' senkrecht zur Längsachse des Transportbandes 15 verschiebbar. Die Betätigung der Schub-Zugstangen kann ebenfalls elektrisch, hydraulisch oder mechanisch erfolgen.

Alternativ zu den in Fig.3 und 4 dargestellten Führungseinrichtungen können über die Breite des Transportbandes 15 verteilt ebenfalls mehrere parallel nebeneinander angeordnete Führungseinrichtungen eingesetzt werden, wobei diese auch als Stellrollen, Förderschnecken oder dergleichen ausgebildet sein können.

## Patentansprüche

1. Erntemaschine zur Aufbereitung von erntefähigem Blatt- oder Halmgut, insbesondere für Grünfutter, die als gezogene oder selbstfahrende Maschine ausgebildet ist, wobei das Gut über Zuführeinrichtungen (1, 2, 3, 4), die unter anderem das Gut gewinnen, einer ersten Aufbereitungsanordnung (7) zugeleitet wird, der ein Transportband (15) nachgeschaltet ist, welches mit einem Pufferraum (10) und einer Dosierwalze (12) in Verbindung steht und bis zu einer zweiten, dahinter angeordneten Aufbereitungsanordnung (16) reicht, und der sich eine Ablageeinrichtung (17) für das aufbereitete und zu einer Matte geformte Erntegut auf dem Boden anschließt, wobei im Bereich des Transportbandes (15) zumindest eine bewegliche Führungseinrichtung (21) vorgesehen ist, mit der die Breite zumindest einer Erntegutmatte einstellbar ist,
*dadurch gekennzeichnet,*
daß der Pufferraum (10) Sensoren (13) zur Erfassung der momentan anfallenden Blatt- oder Halmgutmenge aufweist, über die eine vorzugsweise stufenlose Einstellung der Führungseinrichtung erfolgt und über die eine Drehzahländerung der Antriebsanordnung für das Transportband (15), die Dosierwalze (12) und/oder die Aufbereitungs- oder Preßanordnung (7, 16) mittels einer Regeleinrichtung (14) erreichbar ist.

2. Erntemaschine nach Anspruch 1,
*dadurch gekennzeichnet,* daß die zweite Aufbereitungsanordnung als Preßanordnung (16) ausgelegt ist.

3. Erntemaschine nach den Ansprüchen 1 oder 2,
*dadurch gekennzeichnet,* daß die zweite Aufbereitungsanordnung bzw. Preßanordnung (16) im Vergleich zur ersten Aufbereitungsanordnung (7) breiter ausgeführt ist.

4. Erntemaschine nach einem der Ansprüche 1 bis 3,
*dadurch gekennzeichnet,* daß die Breite des Transprotbandes (15) der Breite der Preßanordnung (16) angepaßt ist.

5. Erntemaschine nach Anspruch 1,
*dadurch gekennzeichnet,* daß mehrere Führungseinrichtungen auf einem Transportband (15) angeordnet sind.

6. Erntemaschine nach Anspruch 1,
*dadurch gekennzeichnet,* daß mehrere Transportbänder mit Führungseinrichtungen nebeneinander angeordnet sind.

7. Erntemaschine nach Anspruch 5 oder 6,
*dadurch gekennzeichnet,* daß die Anzahl der Führungseinrichtungen die Anzahl der nebeneinander die Erntemaschine verlassenden Erntegutmatten bestimmt.

8. Erntemaschine nach einem der vorhergehenden Ansprüche,
*dadurch gekennzeichnet,* daß die Reihen-Anzahl der Erntegutmatten vom Grünfutter-Durchsatz der Erntemaschine bestimmt wird.

9. Erntemaschine nach einem der vorhergehenden Ansprüche,
*dadurch gekennzeichnet,* daß als Führungseinrichtung ein Führungsblech (21, 22) eingesetzt ist, das sich im wesentlichen parallel zum Transportband (15) erstreckt und senkrecht angeordnet ist.

10. Erntemaschine nach einem der vorhergehenden Ansprüche,
*dadurch gekennzeichnet,* daß die Führungsbleche (21, 22) um eine senkrechte Achse (23, 24) schwenkbar sind.

11. Erntemaschine nach einem der vorhergehenden Ansprüche,
*dadurch gekennzeichnet,* daß die Führungsbleche (21, 22) senkrecht zur Längsachse des Transportbandes (15) verschiebbar sind.

12. Erntemaschine nach einem der vorhergehenden Ansprüche,
*dadurch gekennzeichnet,* daß Stellrollen, Förderschnecken und dergleichen als Führungseinrichtung vorgesehen sind.

13. Erntemaschine nach Anspruch 1,
*dadurch gekennzeichnet,* daß ein Getriebe vorgesehen ist, mit dem die Bandgeschwindigkeit des Transportbandes (15) einstellbar ist.

14. Erntemaschine nach Anspruch 1,
*dadurch gekennzeichnet,* daß der Antrieb der Dosierwalze (12) über ein Getriebe erfolgt, über das die Drehzahl der Dosierwalze (12) veränderbar ist.

15. Erntemaschine nach Anspruch 13 oder 14,
*dadurch gekennzeichnet,* daß als Getriebe stufenlos verstellbare Umschlingungsgetriebe Anwendung finden.

16. Erntemaschine nach Anspruch 1,
*dadurch gekennzeichnet,* daß die Zuführeinrichtung eine Pick-Up- oder Schneid-Anordnung aufweist.

17. Erntemaschine nach Anspruch 1,
*dadurch gekennzeichnet,* daß die gezogene Erntemaschine einen Antrieb vom Zugfahrzeug aufweist oder über einen Eigenantrieb verfügt.

## Claims

1. A harvesting machine for processing harvestable leaf or stalk material, more especially green fodder, the machine being drawn or self-propelled and the material being supplied by supply means (1, 2, 3, 4) which inter alia harvest the material, to a first processing arrangement (7) followed by a conveyor belt (15) which is connected to a buffer chamber (10) and a metering roller (12) and extends as far as a second processing arrangement (16) downstream thereof and is adjacent a means (17) for depositing the harvested material on the ground after it has been processed and formed into a mat, at least one movable guide means (21) being provided in the neighbourhood of the conveyor belt (15) for adjusting the width of at least one mat of harvested material, characterised in that the buffer chamber (10) contains sensors (13) for detecting the instantaneously arriving amount of leaf or stalk material and by means of which the guide means is preferably steplessly adjusted and by means of which the speed of the drive means for the conveyor belt (15), the metering roller (12) and/or the processing arrangement or press (7, 16) can be altered by a control means (14).

2. A harvesting machine according to claim 1, characterised in that the second processing arrangement is a press (16).

3. A harvesting machine according to claim 1 or 2, characterised in that the second processing arrangement or press (16) is wider than the first processing arrangement (7).

4. A harvesting machine according to any one of claims 1 to 3, characterised in that the width of the conveyor belt (15) is adapted to the width of the press (16).

5. A harvesting machine according to claim 1, characterised in that a number of guide means are deposed on one conveyor belt (15).

6. A harvesting machine according to claim 1, characterised in that a number of conveyor belts and guide means are disposed side by side.

7. A harvesting machine according to claim 5 or 6, characterised in that the number of guide means determines the number of mats of harvested material leaving the harvesting machine side by side.

8. A harvesting machine according to any one of the preceding claims, characterised in that the number of rows of mats of harvested material depends on the flow rate of green fodder through the harvesting machine.

9. A harvesting machine according to any one of the preceding claims, characterised in that the guide means is a guide plate (21, 22) extending substantially parallel to the conveyor belt (15) and disposed at right angles thereto.

10. A harvesting machine according to any one of the preceding claims, characterised in that the guide plates (21, 22) are pivotable around a vertical axis (23, 24).

11. A harvesting machine according to any one of the preceding claims, characterised in that the guide plates (21, 22) are movable at right angles to the longitudinal axis of the conveyor belt (15).

12. A harvesting machine according to any one of the preceding claims, characterised in that the guide means is in the form of adjusting rollers, screw conveyors or the like.

13. A harvesting machine according to claim 1, characterised in that a gear unit is provided for adjusting the speed of the conveyor belt (15).

14. A harvesting machine according to claim 1, characterised in that the metering roller (12) is driven via a gear unit which can be used to alter the speed of the metering roller (12).

15. A harvesting machine according to claim 13 or 14, characterised in that the gear units are steplessly adjustable belt mechanisms.

16. A harvesting machine according to claim 1, characterised in that the supply means comprises a pick-up or cutting arrangement.

17. A harvesting machine according to claim 1, characterised in that the drawn harvesting machine is driven by a tractor or has a drive of its own.

## Revendications

1. Moissonneuse pour préparer un produit en forme de feuilles ou de tige susceptible d'être récolté, notamment pour du fourrage, cette machine étant une machine tractée ou automotrice, le produit étant conduit par des installations d'alimentation (1, 2, 3, 4) qui récolte entre autres le produit, vers un premier dispositif de préparation (7) suivi d'une bande transporteuse (15) communiquant avec une chambre tampon (10) et un cylindre de dosage (12), en allant jusqu'à un second dispositif de préparation (16) en aval, suivi d'une installation de dépôt (17) qui dépose sur le sol le produit traité et mis en forme de nappe, et au niveau de la bande transporteuse (15), il est prévu au moins une installation de guidage (21), mobile, qui règle la largeur d'au moins une nappe de produit récolté,
moissonneuse caractérisée en ce que :
la chambre tampon (10) est équipée de capteurs (13) pour détecter la quantité de produit en feuilles ou en tiges qui arrive instantanément et assurer de préférence un réglage en continu de l'installation d'alimentation et modifier la vitesse de rotation du dispositif d'entraînement de la bande transporteuse (15), du cylindre de dosage (12) et/ou du dispositif de préparation et de compression (7, 16) à l'aide d'une installation de régulation (14).

2. Moissonneuse selon la revendication 1, caractérisée en ce que le second dispositif de préparation est un dispositif de compression (16).

3. Moissonneuse selon les revendications 1 ou 2, caractérisée en ce que le second dispositif de préparation ou de compression (16) est plus large que le premier dispositif de préparation (7).

4. Moissonneuse selon une des revendications 1 à 3, caractérisée en ce que la largeur de la bande transporteuse (15) est adaptée à la largeur du dispositif de compression (16).

5. Moissonneuse selon la revendication 1, caractérisée en ce que plusieurs installations de guidage sont prévues sur une bande transporteuse (15).

6. Moissonneuse selon la revendication 1, caractérisée par la juxtaposition de plusieurs bandes transporteuses équipées d'installations de guidage.

7. Moissonneuse selon les revendications 5 ou 6, caractérisée en ce que le nombre des installations de guidage définit le nombre de nappes de produit sortant de manière juxtaposée de la moissonneuse.

8. Moissonneuse selon l'une des revendications précédentes, caractérisée en ce que le nombre de rangées de nappes de produit est défini par le débit de fourrage dans la moissonneuse.

9. Moissonneuse selon l'une des revendications précédentes, caractérisée en ce que l'installation de guidage est une tôle de guidage (21, 22) essentiellement parallèle à la direction de la bande transporteuse (15) et perpendiculaire à la bande.

10. Moissonneuse selon l'une des revendications précédentes, caractérisée en ce que les tôles de guidage (21, 22) peuvent pivoter autour d'un axe vertical (23, 24).

11. Moissonneuse selon l'une des revendications précédentes, caractérisée en ce que les tôles de guidage (21, 22) peuvent coulisser perpendiculairement à l'axe longitudinal de la bande transporteuse (15).

12. Moissonneuse selon l'une des revendications précédentes, caractérisée en ce que l'installation de guidage est constituée par des rouleaux de réglage, des vis transporteuses ou des moyens analogues.

13. Moissonneuse selon la revendication 1, caractérisée par une transmission qui règle la vitesse de défilement de la bande transporteuse (15).

14. Moissonneuse selon la revendication 1, caractérisée en ce que l'entraînement du cylindre de dosage (12) est réglable par une transmission en fonction de la vitesse de rotation du cylindre de dosage (12).

15. Moissonneuse selon la revendication 13 ou 14, caractérisée en ce que la transmission est une transmission à courroie réglable en continu.

16. Moissonneuse selon la revendication 1, caractérisée en ce que l'installation d'alimentation est un dispositif de prise (pick-up) ou le dispositif de coupe ou de fauche.

17. Moissonneuse selon la revendication 1, caractérisée en ce que la moissonneuse tractée comporte un moteur indépendant ou est alimentée à partir du moteur tracteur.
